# EUROPEAN PATENT APPLICATION

(11) **EP 3 477 466 A1**
(43) Date of publication of application: **01.05.2019**
(21) Application number: 17199325.6
(22) Date of filing: 31.10.2017
(51) Int. Cl.: G06F 3/16, G06F 3/01

(54) **PROVISION OF VIRTUAL REALITY CONTENT**

(71) Applicant: Nokia Technologies Oy, 02610 Espoo (FI)
(72) Inventor: MATE, Sujeet Shyamsundar, 33720 Tampere (FI); LEHTINIEMI, Arto, 33880 Lempäälä (FI); ERONEN, Antti, 33820 Tampere (FI)
(74) Representative: Sayer, Robert David

(57) **Abstract**

An apparatus and method is disclosed, comprising means for providing virtual reality content associated with a first location of a user in a virtual space. A pathway is provided in the virtual space to a second location in the virtual space or a different virtual space. Selection of the pathway by a user causes traversal of the user to the second location. The apparatus and method also comprises means for providing a sound in the virtual space, the sound indicating the position of the pathway relative to the first location.

## Description

### Field of the Invention

This invention relates to virtual reality, particularly the provision of virtual reality content for display at a user display system, e.g. a virtual reality headset.

### Background of the Invention

Virtual reality (VR) is a rapidly developing area of technology in which video content is provided to a virtual reality display system. As is known, a virtual reality display system may be provided with a live or stored feed from a video content source, the feed representing a virtual reality space or world for immersive output through the display system. In some example embodiments, audio is provided, which may be spatial audio. A virtual space or virtual world is any computer-generated version of a space, for example a captured real world space, in which a user can be immersed through a display system such as a virtual reality headset. A virtual reality headset may be configured to provide virtual reality video and audio content to the user, e.g. through the use of a pair of video screens and headphones incorporated within the headset.

Position and/or movement of the user device can enhance the immersive experience. Currently, most virtual reality headsets use so-called three degrees of freedom (3DoF) which means that the head movement in the yaw, pitch and roll axes are measured and determine what the user sees. This facilitates the scene remaining largely static in a single location as the user rotates their head. A next stage may be referred to as 3DoF+ which may facilitate limited translational movement in Euclidean space in the range of, e.g. tens of centimetres, around a location. A yet further stage is a six degrees-of-freedom (6DoF) virtual reality system, where the user is able to freely move in the Euclidean space and rotate their head in the yaw, pitch and roll axes. Six degrees-of-freedom virtual reality systems and methods will enable the provision and consumption of volumetric virtual reality content.

Volumetric virtual reality content comprises data representing spaces and/or objects in three-dimensions from all angles, enabling the user to move fully around the spaces and/or objects to view them from any angle. For example, a person or object may be fully scanned and reproduced within a real-world space. When rendered to a virtual reality headset, the user may 'walk around' the person or object and view them from the front, the sides and from behind.

For the avoidance of doubt, references to virtual reality are also intended to cover related technologies such as augmented reality (AR) and mixed reality (MR.)

### Summary of the Invention

A first aspect provides an apparatus comprising: means for providing virtual reality content associated with a first location of a user in a virtual space; means for providing a pathway in the virtual space to a second location in the virtual space or a different virtual space, wherein selection of the pathway by a user causes traversal of the user to the second location; and means for providing a sound in the virtual space, the sound indicating the position of the pathway relative to the first location.

The sound providing means may be arranged such that the sound is a modified version of an existing sound. The existing sound may be a recorded sound or an artificial sound, such as a computer- generated sound.

The sound providing means may be arranged such that the sound has a different playback speed to the speed of the recorded sound.

The sound providing means may be arranged such that the playback speed of the sound is proportional to a time the user will take to automatically traverse the pathway.

The sound providing means may be arranged such that the sound is a spatio-temporal audio object having a changing location in the virtual space.

The sound providing means may be arranged such that the audio object traverses the virtual space along a path substantially corresponding to at least part of the pathway.

The sound providing means may be arranged such that a location of the audio object in the virtual space indicates a current location of at least part of the pathway.

The sound providing means may be arranged such that the audio object is provided in the virtual space before the pathway is provided in the virtual space, wherein a location and/or movement of the audio object in the virtual space indicates a location in virtual space at which at least part of the pathway is subsequently provided.

The apparatus may further comprise: means for determining selection of the pathway by the user; and means, in response to determining selection of the pathway by the user: for causing automatic traversal of the user to the second location; and for providing virtual reality content associated with the second location.

The means for determining selection of the pathway may be arranged such that selection is based on a location of at least part of the user in the virtual space.

The means for determining selection of the pathway may be arranged such that selection is further based on a length of time that the at least part of the user is at said location.

The means for determining selection of the pathway may be arranged such that selection is based on determining a gesture of the user.

The apparatus may further comprise: means for determining that a user wishes to preview virtual reality content associated with the pathway or second location; and means for providing a preview of virtual reality content associated with the pathway or second location.

A further aspect provides a method comprising: providing virtual reality content associated with a first location of a user in a virtual space; providing a pathway in the virtual space to a second location in the virtual space or a different virtual space, wherein selection of the pathway by a user causes traversal of the user to the second location; and providing a sound in the virtual space, the sound indicating the position of the pathway relative to the first location.

A further aspect provides a computer program comprising instructions that when executed by a computer control it to perform: providing virtual reality content associated with a first location of a user in a virtual space; providing a pathway in the virtual space to a second location in the virtual space or a different virtual space, wherein selection of the pathway by a user causes traversal of the user to the second location; and providing a sound in the virtual space, the sound indicating the position of the pathway relative to the first location

A further aspect provides an apparatus comprising at least one processor, at least one memory including computer program code, the memory and the computer program code configured to, working with the processor, cause the apparatus to perform at least the following: providing virtual reality content associated with a first location of a user in a virtual space; providing a pathway in the virtual space to a second location in the virtual space or a different virtual space, wherein selection of the pathway by a user causes traversal of the user to the second location; and providing a sound in the virtual space, the sound indicating the position of the pathway relative to the first location.

A further aspect provides at least one computer-readable medium encoded with instructions that, when executed by a processor, perform providing virtual reality content associated with a first location of a user in a virtual space; providing a pathway in the virtual space to a second location in the virtual space or a different virtual space, wherein selection of the pathway by a user causes traversal of the user to the second location; and providing a sound in the virtual space, the sound indicating the position of the pathway relative to the first location.

### Brief Description of the Drawings

The invention will now be described, by way of non-limiting example, with reference to the accompanying drawings, in which:
Figure 1 is a perspective view of a VR display system;
Figure 2 is a block diagram of a computer network including the Figure 1 virtual reality display system, in accordance with example embodiments of the invention;
Figure 3 is a schematic diagram of an example, conventional virtual reality, augmented reality or mixed reality capture scenario;
Figure 4 is a schematic diagram of a further virtual reality capture scenario for capturing volumetric virtual reality content, in accordance with example embodiments;
Figure 5 is a top plan view of a first virtual world, and overlaid first and second positions of a user immersed in the first virtual world;
Figures 6a and 6b are user viewpoints of the Figure 5 first virtual world at the respective first and second positions;
Figure 7 is a schematic diagram of components of a content provider system shown in Figure 4;
Figure 8 is a perspective view of a virtual space which a user may explore using six degrees-of-freedom (6DoF);
Figure 9 is a perspective view of a virtual space having a traversal pathway indicated by sound, in accordance with example embodiments;
Figure 10 is a perspective view of the Figure 9 virtual space, in which the indicative sound is a spatio-temporal sound, in accordance with example embodiments;
Figure 11 is a perspective view of the Figure 9 virtual space, showing automatic traversal of a user along the pathway, in accordance with example embodiments;
Figure 12 is a perspective view of a virtual space, in which an indicative sound is a spatio-temporal sound, provided prior to arrival of a traversal pathway, in accordance with example embodiments;
Figure 13 is a perspective view of the Figure 12 virtual space, showing arrival of the traversal pathway, in accordance with example embodiments;
Figures 14 is a perspective view of the Figure 12 virtual space, in which a user gesture is detected, in accordance with example embodiments;
Figure 15 is a perspective view of the Figure 12 virtual space, in which a preview of a pathway destination is provided, in accordance with example embodiments;
Figure 16 is a perspective view of first and second virtual spaces, in which a traversal pathway causes automatic traversal between said virtual spaces, in accordance with example embodiments;
Figure 17 is a perspective view of the Figure 16 virtual spaces, in which an indicative sound is a spatio-temporal sound provided prior to arrival of a traversal pathway, in accordance with example embodiments;
Figure 18 is a perspective view of the Figure 16 virtual spaces, in which a preview of a pathway destination is provided in accordance with example embodiments;
Figure 19 is a perspective view of the Figure 16 virtual spaces, showing arrival of the user in the second virtual space, in accordance with example embodiments;
Figure 20 is a flow diagram showing processing operations performed in accordance with example embodiments;
Figure 21 is a flow diagram showing further processing operations performed in accordance with example embodiments; and
Figure 22 is a schematic diagram of components of a virtual reality media player in accordance with example embodiments.

### Detailed Description of Preferred Embodiments

Example embodiments herein relate to virtual reality (VR) and in particular to the provision of volumetric 3D spaces or worlds, or indeed any form of virtual reality content, to one or more users using a user device, such as a virtual reality display system. However, the methods and systems described herein are not limited as such, and can be used in any virtual reality application, including augmented reality (AR) and/or mixed reality (MR) and even sound-only applications. In augmented reality, a direct or indirect view of a real-world space is provided, which may be augmented by computer-generated or extracted sensory input such as sound, video, graphics or other data. For example, data may be overlaid over the real-world space. Mixed reality refers to the merging of real and virtual worlds.

Embodiments enable provision of virtual reality spaces or worlds for users located in a real-world space having limited dimensions and/or with one or more objects located in the real-world space. For example, a user may wish to select one or more virtual reality spaces or worlds for consumption in a room at home, at work or at school.

Example embodiments relate to methods and systems for providing a one or more virtual reality worlds or content for display to a virtual reality user device whereby a user can browse and select one or more virtual reality worlds or content for rendering, even when consuming the content within a limited real-world area. For example, the real-world area may be a modest-sized room bounded by walls or other upright surfaces. The real-world area may have one or more real-world objects therein. Problems may exist due to the presence of real-world object(s). For example, the user may be obstructed from experiencing the entire virtual reality world and an object may also present a hazard that may result in injury, e.g. due to tripping.

The virtual reality worlds are represented by virtual reality content data. In some example embodiments, the virtual reality content data may be stored remotely from the one or more users, and streamed to users over a network, e.g. an IP network such as the Internet. In some example embodiments, the virtual reality content data may be stored local to the one or more users on a memory device, such as a hard disk drive (HDD) or removable media such as a CD-ROM, DVD or memory stick. In some example embodiments, the virtual reality content data may be stored on a cloud-based system.

In example embodiments described herein, it is assumed that the virtual reality content data is stored remotely from one or more users, e.g. at a content server, and streamed over an IP network to one or more users. The data stream of virtual reality content data may represent one or more virtual reality spaces or worlds for immersive output through the display system. In some example embodiments, audio may also be provided, which may be spatial audio.

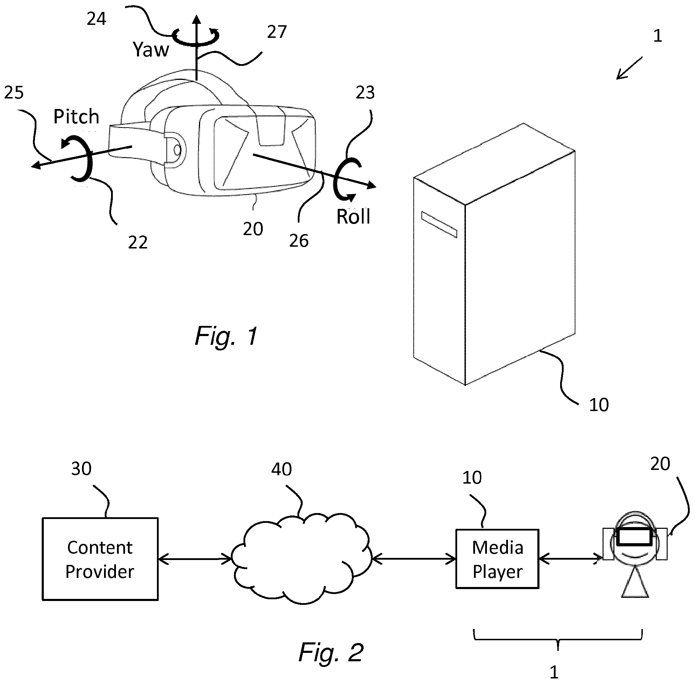

Figure 1 is a schematic illustration of a virtual reality display system 1 which represents user-end equipment. The virtual reality system 1 includes a user device in the form of a virtual reality headset 20, for displaying visual data for a virtual reality space, and a virtual reality media player 10 for rendering visual data on the virtual reality headset 20. In some example embodiments, a separate user control (not shown) may be associated with the virtual reality display system 1, e.g. a hand-held controller.

In the context of this specification, a virtual space or world is any computer-generated version of a space, for example a captured real world space, in which a user can be immersed. In some example embodiments, the virtual space may be entirely computer-generated, i.e. not captured. The virtual reality headset 20 may be of any suitable type. The virtual reality headset 20 may be configured to provide virtual reality video and audio content data to a user. As such, the user may be immersed in virtual space.

The virtual reality headset 20 receives the virtual reality content data from a virtual reality media player 10. The virtual reality media player 10 may be part of a separate device which is connected to the virtual reality headset 20 by a wired or wireless connection. For example, the virtual reality media player 10 may include a games console, or a PC configured to communicate visual data to the virtual reality headset 20.

Alternatively, the virtual reality media player 10 may form part of the virtual reality headset 20.

Here, the virtual reality media player 10 may comprise a mobile phone, smartphone or tablet computer configured to play content through its display. For example, the virtual reality media player 10 may be a touchscreen device having a large display over a major surface of the device, through which video content can be displayed. The virtual reality media player 10 may be inserted into a holder of a virtual reality headset 20. With such virtual reality headsets 20, a smart phone or tablet computer may display visual data which is provided to a user's eyes via respective lenses in the virtual reality headset 20. The virtual reality display system 1 may also include hardware configured to convert the device to operate as part of virtual reality display system 1. Alternatively, the virtual reality media player 10 may be integrated into the virtual reality headset 20. The virtual reality media player 10 may be implemented in software. In some example embodiments, a device comprising virtual reality media player software is referred to as the virtual reality media player 10.

The virtual reality display system 1 may include means for determining the spatial position of the user and/or orientation of the user's head. This may be by means of determining the spatial position and/or orientation of the virtual reality headset 20. Over successive time frames, a measure of movement may therefore be calculated and stored. Such means may comprise part of the virtual reality media player 10. Alternatively, the means may comprise part of the virtual reality headset 20. For example, the virtual reality headset 20 may incorporate motion tracking sensors which may include one or more of gyroscopes, accelerometers and structured light systems. These sensors generate position data from which a current visual field-of-view (FOV) is determined and updated as the user, and so the virtual reality headset 20, changes position and/or orientation. The virtual reality headset 20 may may comprise two digital screens for displaying stereoscopic video images of the virtual world in front of respective eyes of the user, and also two speakers for delivering audio, if provided from the virtual reality media player 10. The example embodiments herein, are not limited to a particular type of virtual reality headset 20.

In some example embodiments, the virtual reality display system 1 may determine the spatial position and/or orientation of the user's head using the above-mentioned six degrees-of-freedom method. As shown in Figure 1, these include measurements of pitch 22, roll 23 and yaw 24 and also translational movement in Euclidean space along side-to-side, front-to-back and up-and-down axes 25, 26, 27.

The virtual reality display system 1 may be configured to display virtual reality content data to the virtual reality headset 20 based on spatial position and/or the orientation of the virtual reality headset. A detected change in spatial position and/or orientation, i.e. a form of movement, may result in a corresponding change in the visual data to reflect a position or orientation transformation of the user with reference to the space into which the visual data is projected. This allows virtual reality content data to be consumed with the user experiencing a 3D virtual reality environment.

In the context of volumetric virtual reality spaces or worlds, this means that the user's position can be detected relative to content provided within the volumetric virtual reality content, e.g. so that the user can move freely within a given virtual reality space or world, around individual objects or groups of objects, and can view the objects from different angles depending on the rotation of their head. In example embodiments to be described later on, the user may also view and explore a plurality of different virtual reality spaces or worlds and move from one virtual reality space or world to another one.

Audio data may also be provided to headphones provided as part of the virtual reality headset 20. The audio data may represent spatial audio source content. Spatial audio may refer to directional rendering of audio in the virtual reality space or world such that a detected change in the user's spatial position or in the orientation of their head may result in a corresponding change in the spatial audio rendering to reflect a transformation with reference to the space in which the spatial audio data is rendered.

The angular extent of the environment observable through the virtual reality headset 20 is called the visual field of view (FOV). The actual FOV observed by a user depends on the inter-pupillary distance and on the distance between the lenses of the virtual reality headset 20 and the user's eyes, but the FOV can be considered to be approximately the same for all users of a given display device when the virtual reality headset is being worn by the user.

Referring to Figure 2, a remote content provider 30 may store and transmit streaming virtual reality content data which, in the context of example embodiments, is volumetric virtual reality content data for output to the virtual reality headset 20. Responsive to receive or download requests sent by the virtual reality media player 10, the content provider 30 streams the virtual reality data over a data network 40, which may be any network, for example an IP network such as the Internet.

The remote content provider 30 may or may not be the location or system where the virtual reality video is captured, created and/or processed.

For illustration purposes, we may assume that the content provider 30 also captures, encodes and stores the virtual reality content, as well as streaming it responsive to signals from the virtual reality display system 1.

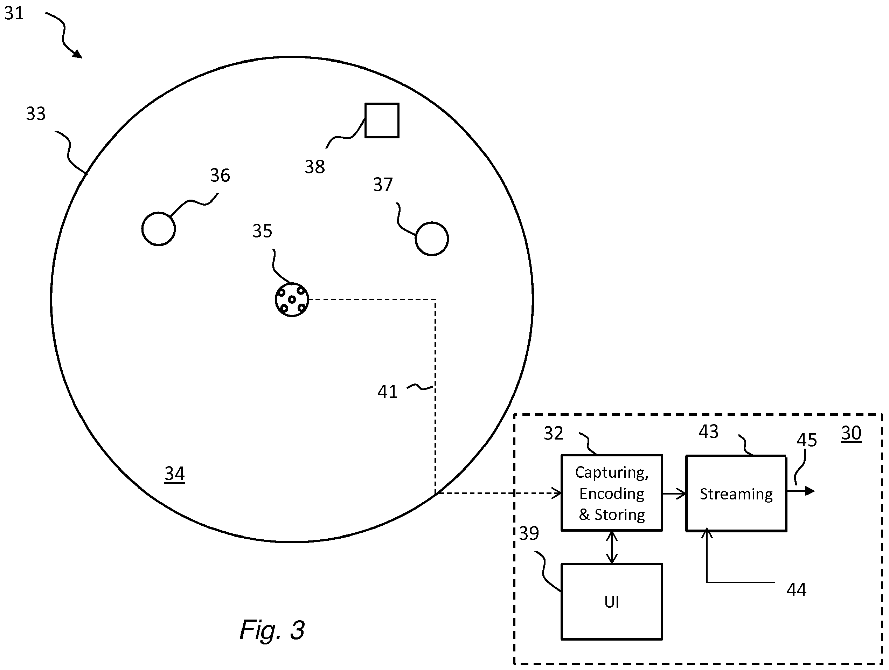

Referring to Figure 3, an overview of a conventional virtual reality capture scenario 31 is shown. The virtual reality capture scenario 31 is shown together with a capturing, encoding and storing module 32 and an associated user interface 39. Figure 3 shows in plan-view a real world space 33 which may be for example a concert hall or other music venue. The capturing, encoding and storing module 32 is applicable to any real world space, however. A virtual reality capture device 35 for video and possibly spatial audio capture may be supported on a floor 34 of the real-world space 33 in front of one or more objects 36, 37, 38. The objects 36, 37, 38 may be static objects or may move over time. One or more of the objects 36, 37, 38 may be a person. One or more of the objects 36, 37, 38 may be furniture. One or more of the objects 36, 37, 38 may generate audio, e.g. a singer, a performer or a musical instrument.

The position of the virtual reality capture device 35 may be known, e.g. through predetermined positional data or signals derived from a positioning tag on the virtual reality capture device. The virtual reality capture device 35 in this example may comprise multiple cameras distributed around a body of the virtual reality capture device and a microphone array configured to provide spatial audio capture.

One or more of the objects 36, 37, 38 may carry a positioning tag. A positioning tag may be any module capable of indicating through data its respective spatial position to the capturing, encoding and storing module 32. For example a positioning tag may be a high accuracy indoor positioning (HAIP) tag which works in association with one or more HAIP locators within the space 33. HAIP systems use Bluetooth Low Energy (BLE) communication between the tags and the one or more locators. For example, there may be four HAIP locators mounted on, or placed relative to, the virtual reality capture device 35. A respective HAIP locator may be to the front, left, back and right of the virtual reality capture device 35. Each tag sends BLE signals from which the HAIP locators derive the tag, and therefore, audio source location. The tracking of the objects 36, 37, 38 may be performed using visual analysis, audio analysis, depth sensor analysis or a combination of any of the above.

In general, such direction of arrival (DoA) positioning systems are based on (i) a known location and orientation of the or each locator, and (ii) measurement of the DoA angle of the signal from the respective tag towards the locators in the locators' local co-ordinate system. Based on the location and angle information from one or more locators, the position of the tag may be calculated using geometry.

The capturing, encoding and storing module 32 is a processing system, possibly having an associated user interface (UI) 39 which may be used by an engineer or mixer to monitor and/or modify any aspect of the captured video and/or audio. As shown in Figure 3, the capturing, encoding and storing module 32 receives as input from the virtual reality capture device 35 spatial video data (and possibly audio data) and positioning data, through a signal line 41. Alternatively, the positioning data may be received from a HAIP locator. The capturing, encoding and storing module 32 may also receive as input from one or more of the objects 36, 37, 38 audio data and positioning data from respective positioning tags through separate signal lines. The capturing, encoding and storing module 32 generates and stores the virtual reality video and audio data for output to a user device 19, such as the virtual reality system 1 shown in Figures 1 and 2, via a signal line 45.

The input audio data may be multichannel audio in loudspeaker format, e.g. stereo signals, 4.0 signals, 5.1 signals, Dolby Atmos (RTM) signals or the like. Instead of loudspeaker format audio, the input may be in the multi microphone signal format, such as the raw eight signal input from the Nokia OZO (RTM) virtual reality camera, if used for the virtual reality capture device 35. It will however be appreciated that other types of virtual reality capture device may be used. In some example embodiments, no visual capture device is needed. The microphone signals can then be rendered to loudspeaker or binaural format for playback.

Associated with the capturing, encoding and storing module 32 is a streaming system 43, for example a streaming server. The streaming system 43 may be an entirely separate system from the capturing, encoding and storing module 32. Signal line 44 indicates an input received over the network 40 from the virtual reality system 1. The virtual reality system 1 indicates through such signalling the data to be streamed dependent on position and/or orientation of the virtual reality display device 20. Reference numeral 45 indicates the signal line to the network 40.

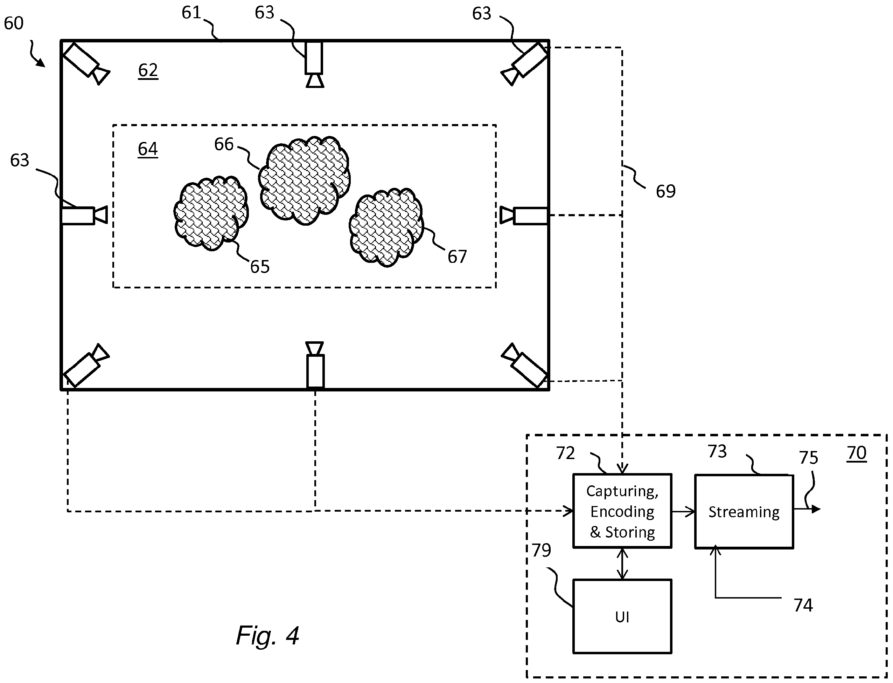

Referring to Figure 4, an overview of a volumetric virtual reality capture scenario 60 is shown according to some example embodiments. The capture scenario 60 is shown together with processing modules provided at a content provider system 70, including a capturing, encoding and storing module 72 and an associated user interface 79, which is optional. Figure 4 shows in plan-view a real world space 61 which may be for example a garden comprising three trees 65, 66, 67. The capturing, encoding and storing module 72 is applicable to any real world space, however. In this case, multiple cameras 63 are positioned around the real-world space 61 (and may be positioned at different heights) so as to capture video from a focal capture zone 64 from all sides in order to generate a full three-dimensional representation of the objects 65, 66, 67 within the focal capture zone. It will be appreciated that a greater, or a fewer number of cameras 63 may be provided in practice. In some example embodiments, one or more microphones (not shown) may also be provided for capturing spatial audio. The dimensions of the focal capture zone 64 may be larger or smaller.

Similar to the Figure 3 scenario, the capturing, encoding and storing module 72 is a processing system which may have an associated user interface (UI) 79 which may be used by an engineer or mixer to monitor and/or modify any aspect of the captured video and/or audio. As shown in Figure 4, the capturing, encoding and storing module 72 receives as input from the cameras 63 the video data. The video data may be received using signal line(s) 69, only a subset of which are shown, and/or by wireless means. The respective position of each camera 63 may be predetermined, or, in some example embodiments, each camera may have an associated positioning tag (e.g. a HAIP positioning tag) used to indicate the position of each camera in the real-world space 61. If audio data is provided, the capturing, encoding and storing module 72 may also receive as input audio data using wired or wireless means. The capturing, encoding and storing module 72 processes the received video data, and possibly audio data, to generate using known techniques a volumetric three-dimensional world representing the focal capture zone 64. This captured 'virtual world' is stored for output to a user device, such as the virtual reality system 1 via signal line 75.

Similar to the Figure 3 scenario, if audio is captured, the audio data may be multichannel audio in loudspeaker format, e.g. stereo signals, 4.0 signals, 5.1 signals, Dolby Atmos (RTM) signals or the like. Instead of loudspeaker format audio, the input may be in the multi microphone signal format, such as the raw eight signal input. The microphone signals can then be rendered to loudspeaker or binaural format for playback.

Similar to the Figure 3 scenario, associated with the capturing, encoding and storing module 72 is a streaming system 73, for example a streaming server. The streaming system 73 may be an entirely separate system from the capturing, encoding and storing module 72. Signal line 74 indicates an input received over the network 40 from the virtual reality system 1. As will be explained, the virtual reality system 1 indicates through such signalling video data to be streamed dependent on position and/or orientation of the virtual reality headset 20 within a corresponding virtual reality space. Reference numeral 75 indicates the signal line to the network 40.

In example embodiments herein, the capturing, encoding and storing module 72 stores a plurality of virtual worlds, each of which may represent different volumetric virtual reality content.

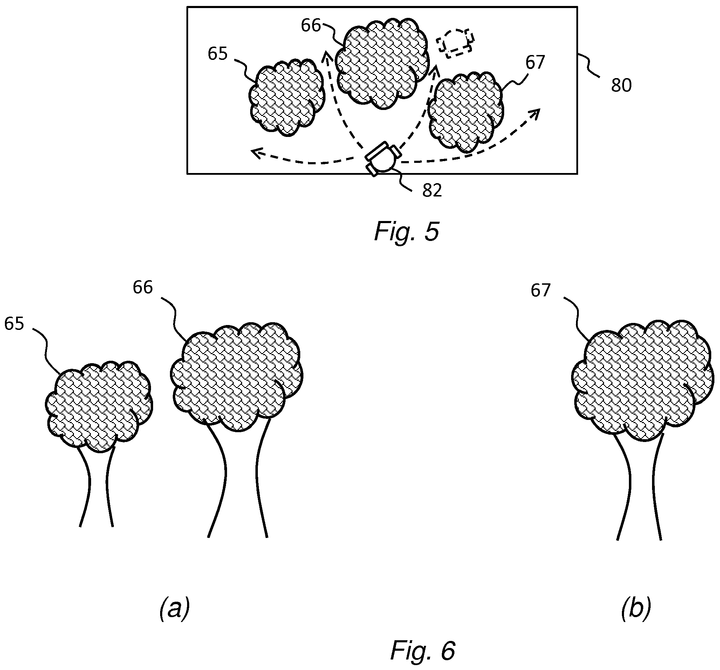

Figure 5 shows in top-plan view a first example virtual world 80, captured using, for example, the Figure 4 scenario 60, although other methods of generating the virtual world may be used. The virtual world 80 comprises a three-dimensional, volumetric representation of a garden comprising the first, second and third trees 65, 66, 67. Also shown is the relative position of a user 82 wearing the virtual reality headset 20 when in a first position and in a subsequent, second position indicated by broken lines. The broken arrows indicate that the user 82 may move freely around the trees 65, 66, 67 and view them from all directions and orientations.

Figure 6a is a graphical view of virtual reality content data which is rendered to the virtual reality headset 20 when the user 82 is in the first position. Particularly, the three-dimensional image that is rendered to the virtual reality headset 20 will be the first and second trees 65, 66. Figure 6b is a graphical view of what is rendered to the virtual reality headset 20 when the user 82 is in the second position, having rotated their body towards the rear of the third tree 67.

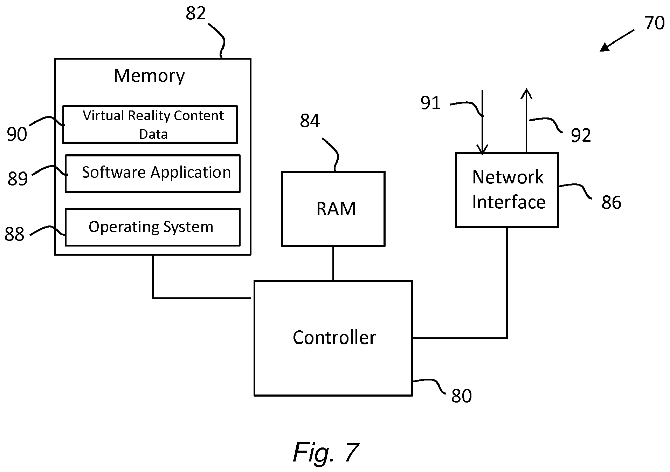

Figure 7 is a schematic diagram of components of the content provider system 70. The content provider system 70 may have a controller 80, a memory 82 and RAM 84. The content provider system 70 may comprise a network interface 86 for connection to the network 40, e.g. a modem which may be wired or wireless. The content provider system 70 may also receive positional signals from the virtual reality headset 20 over signal line 74 and outputs streaming content for one or more virtual worlds over signal line 75. The positional signals may be indicative of user position/orientation. The output signals to the display device 10 will be the virtual reality content data. The controller 80 is connected to each of the other components in order to control operation thereof.

The memory 82 may be a non-volatile memory such as read only memory (ROM), a hard disk drive (HDD) or a solid state drive (SSD). The memory 82 stores, amongst other things, an operating system 88 and may store software applications 89. The RAM 84 is used by the controller 80 for the temporary storage of data. The operating system 88 may contain code which, when executed by the controller 80 in conjunction with the RAM 84, controls operation of each of the hardware components.
Additionally, the memory 82 stores a set of virtual reality content data 90 (hereafter "virtual content") which may be any form of virtual content arranged in any suitable form. The virtual content 90 may comprise three-dimensional volumetric items, for example virtual worlds and/or objects.

The controller 80 may take any suitable form. For instance, it may be a microcontroller, plural microcontrollers, a processor, or plural processors.

In some example embodiments, the content provider system 70 may also be associated with external software applications or virtual content not stored on the memory 82. These may be applications or virtual content stored on a remote server device and may run partly or exclusively on the remote server device. These applications or virtual content may be termed cloud-hosted applications or data. The content provider system 70 may be in communication with the remote server device in order to utilize the software application or data stored there.

In some example embodiments, the components shown in Figure 7 may be provided at the media player 10 (without the need for the network interface 86) so that the functionality described herein is provided locally rather than remotely.

One software application 89 provided on the memory 82 is for controlling what is transmitted and rendered to the virtual reality system 1.

Real-world spaces such as those in which a user will be wearing the virtual reality headset 20 are usually limited in size. In general, limitations of the physical environment may detract from the user experience and, in some cases, may make it difficult or impossible to consume, for example if a six degrees-of-freedom virtual world represented by the virtual content is larger than the real-world physical environment. A virtual world may be larger than the real world if its explorable area is larger in terms of area or volume than the real-world the user is located within. For example, a virtual world may represent an events arena, such as a concert hall or sports field, which has a larger floor area that can be moved within by the user than that of the physical room they are located in, bounded by walls. For example, walking from one side of the arena to the other side in the virtual world may be prevented by the walls of the physical room. Moreover, a user wishing to explore a relatively large virtual world may become tired or disinterested if they have to walk a large distance between different portions of virtual content.

Example embodiments herein comprise methods and systems providing automatic traversal of a user from a first location to a second location in virtual content. For example, there may be provided virtual reality video content associated with a first location of a user in a virtual space. A pathway in the virtual space may be provided to a second location in the virtual space, or a different virtual space, wherein selection of the pathway by a user causes automatic traversal of the user to the second location. A sound in the virtual space may be provided, the sound indicating the position of the pathway relative to the first location.

The above operations, and other operations to be described below, may be performed by the controller 80 under software control, for example under control of the software application 89.

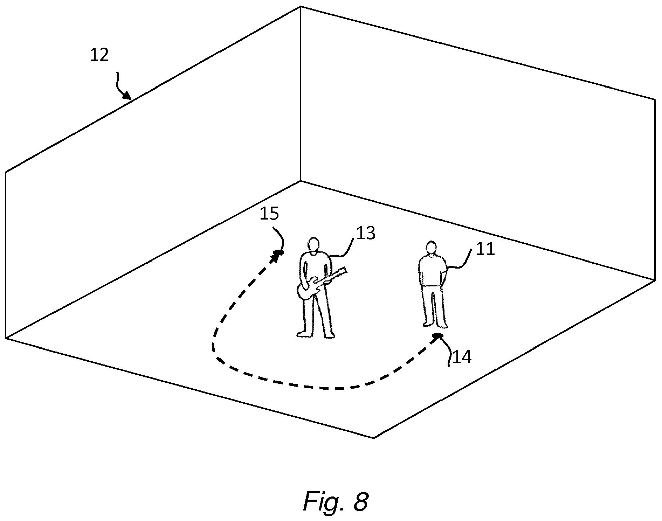

Referring to Figure 8, a user 11 is shown immersed in a virtual space 12, represented by virtual content data, the virtual space comprising a room bounded by walls and a floor. Within the virtual space 12 is displayed an audio object, in this case a performer 13. The audio object can be any audio object. The performer 13 may be generating a sound, e.g. music and/or speech. The user 11is positioned at a first location 14 within the virtual space and, in accordance with known position and/or movement determination methods, may move within the virtual space with six degrees-of-freedom . In the shown example, the user 13 moves to a second location 15. The path taken by the user 11 in the virtual space 12 will be traversed at a particular movement speed, usually closely corresponding to the walking gait of the user in the real world. This may vary over time. The virtual space 12 may be larger than the real world space in which the user is located, which may present problems if the user approaches walls or obstacles in the real world space.

In accordance with an example embodiment, the software application 89 may generate a traversal pathway within the virtual space 12, which is represented by the virtual content. The pathway is not necessarily visible to the user 13.

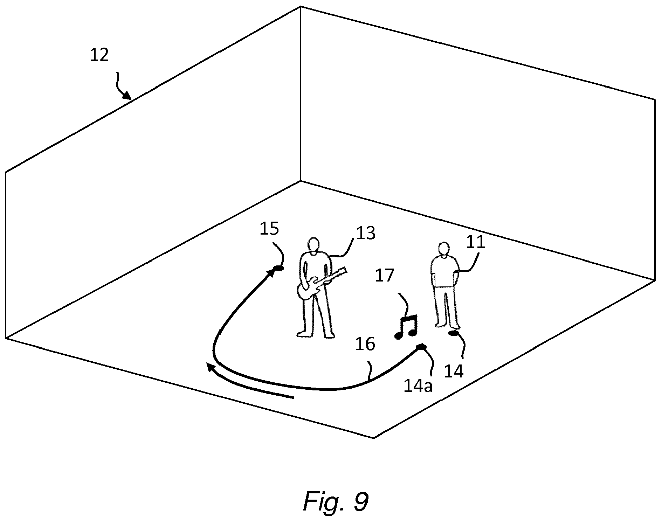

Referring to Figure 9, the traversal pathway 17 is shown within the virtual space 12. The pathway 17 extends from a first location 14a to the second location 15. The pathway 15 represents a path or track that is automatically traversed by the user 11 upon selection of the pathway. Automatic traversal in this sense means that the user 11 will move along said pathway 15 without needing to move in the real-world space, or when moving at rate which is different than the rate of traversal. It may be considered akin to moving on a virtual conveyer belt.

Selection of the pathway 16 may be by any suitable means. For example, selection of the pathway 16 may be by means of the user 11 moving over, i.e. intersecting, any part of the pathway, or a particular part of the pathway. Alternatively, selection of the pathway 16 may be by means of the user 11 moving to within a predetermined distance of the pathway, or a particular part of the pathway. Alternatively still, selection of the pathway 16 may be by means of the user 11 making a predetermined gesture towards, or in the vicinity of, the pathway. For example, the gesture may be a hand or foot gesture. Alternatively still, selection of the pathway 16 may be by means of the user interacting with the pathway, e.g. using any of the above methods, for a predetermined period of time.

The location of the pathway 16 in the virtual space 12 may be indicated by an audio signal. The audio signal may be a spatial audio signal.

For example, an audio signal may represent a sound 17, or composite sounds, spatially positioned within the virtual space 12 to indicate the presence and/or location of the pathway 16. The use of a sound 17 as a sound indicator has the advantage of not requiring further visual indicators and therefore avoids cluttering the user's field of view. The sound 17 may comprise sound from an object already in the virtual space 12, for example the performer 13. Alternatively, the sound 17 may comprise sound from an object outside of the virtual space 12. A combination of sounds from inside and outside the virtual room may be provided.

The traversal speed of the pathway 16, i.e. the speed at which the user 11 moves along the pathway, may be quicker than the speed at which the user moves within the virtual space 12. In other words, the traversal speed of the pathway 16 may be quicker than the speed at which the user moves when on the pathway, or the speed prior to selection of the pathway. For example, if the user enters the pathway 16 walking at three miles per hour, the speed of traversal may be two or more times that walking speed, e.g. nine miles per hour, as an example. The walking speed may be a reference speed, e.g. an average user's walking speed. The speed of traversal is not necessarily linked to the walking speed. For example, it may be set a predetermined speed. For example, traversal may be performed at the predetermined speed even if the user 11 stands still when on the pathway 16.

The pathway 16 may therefore be akin to a fast-moving virtual conveyor belt.

In some example embodiments, the sound 17 indicative of the pathway 16 may have a fast playback speed to audibly indicate the presence of the pathway being a fast traversal pathway. The fast playback speed may be related to the traversal speed. For example, if the traversal speed is three times the user's walking speed, or some other reference walking speed, the sound may be played three times faster. The fast playback speed may be relative to the recorded sound, i.e. n times faster than the speed at which the sound was recorded. In any event, it will be apparent to the user 11 that a playback speed is faster than usual, even if the sound is synthesised.

In some example embodiments, the sound 17 may correspond to an object in or outside the virtual space 12. The object may or may not be visible in the virtual space. The sound 17 may correspond to a moving object. The sound 17 may be a combination of a moving audio object, where some components of the audio signal represent the speed of the audio object, and other components which are not affected by speed. For example, a vehicle arriving towards the virtual space 12 may indicate its speed but the speech of a person inside the vehicle may not reflect the speed of the car.

In some example embodiments, the pathway 16 may extend to a different virtual space, for example where the second location is in a different virtual room. The pathway 16 may be akin to a teleporting pathway in this case.

Speed of movement may be indicated by the speed of spatial movement of the sound 17, a Doppler effect or any other suitable effect creating the perception of something moving relatively fast.

The pathway 17 may be permanent or temporary, e.g. present for a limited period.

In some example embodiments, the sound 17 may represent a non-diagetic sound. Said sound 17 may indicate spatio-temporal coordinates for accessing the pathway 16. For example, a fast moving vehicle sound may indicate the arrival of a temporary pathway; the sound may halt at a specific spatial location for a predetermined interval to be accessed. Subsequently, the sound may move onwards in a predetermined direction. Such an example embodiment may be applicable to a pathway 15 which takes the user 11 from one virtual space 12 to another.

The sound 17 may be a portion of an existing sound in the virtual space. For example, the sound 17 may be the reverberant tail of a source sound, such that the first part of the sound is at its original location and the reverberant tail moves at a faster speed towards the location of interest. If no reverberation is present, a reverberation or delay effect may be enabled and the modified version of the original sound may be the one indicating the direction of the pathway 16 or location of interest.

The sound 17 may comprise a plurality of beats or pulses. For example, for a sound 17 corresponding to a bouncing ball, the first bounce or bounces may indicate the normal location of an object in the virtual space. A subsequent bounce or bounces may indicate the pathway 16 or location of interest.

The sound 17 may be a spectral portion of a recorded sound. For example, the sound 17 may be a high, low, or band-limited portion of the recorded sound. For musical sounds, the portion could be some notes of a musical performance, such that selected notes move at a faster pace towards the pathway 16 or location of interest whilst the main melody remains in its original location.

The sound 17 may be from one or more selected instruments, for example from a musical excerpt, such as the cymbal sound.

A fast moving sound 17 may consist of the sound from an object when it is moving at speed. For example, the audio may correspond to a moving vehicle, starting at time T₁, moving at speed from an expected direction to indicate the impending arrival of a car which appears stationary in the virtual content at a subsequent time T2.

In some example embodiments, the sound 17 may have a slower playback speed, e.g. if the pathway 16 moves the user 11 at a slower speed than normal walking speed.

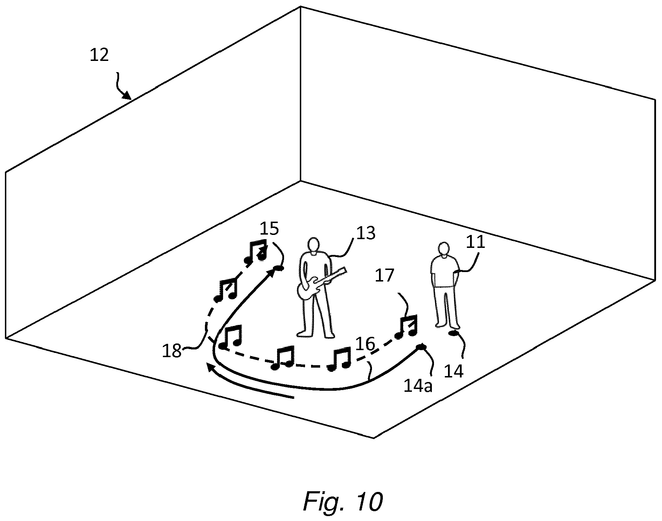

Referring to Figure 10, the pathway 16 is indicated in the virtual space 12 by an audio signal that is spatially positioned substantially above the pathway. For example, the audio signal may represent sound 17 from the performer 13, or some other audio source. For example, the sound 17 may be such that it has a trajectory 18 substantially above the pathway 16. This gives the user 11 perception as to where the pathway 16 is, and its contour. The sound 17 may be spatially reproduced such that its position moves along the trajectory 18 for different temporal instances, giving the perception of movement. For example, the sound 17 may initially be positioned above the first location 14a and then moves along the trajectory 18 until it reaches the second location 15. The sound may then return to be above the first location 14a. The sound may move smoothly, or it may move incrementally between discrete positions on the trajectory 18. The speed of the sound 17 may be indicative of how fast or slow the traversal will be, if and when the pathway 16 is selected.

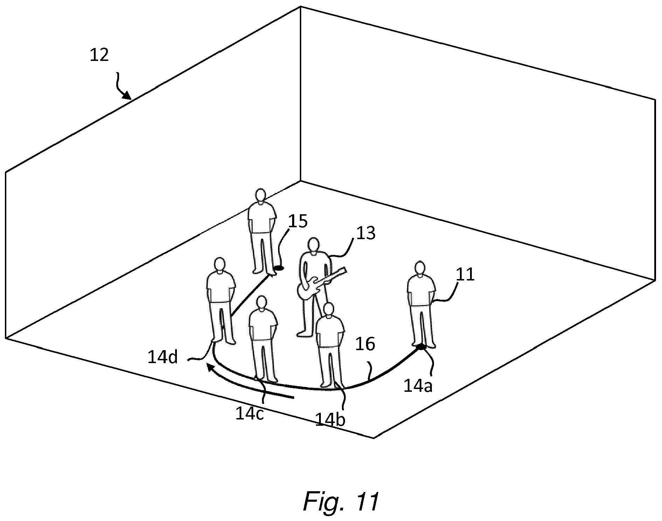

Referring to Figure 11, the user 11 is shown traversing the Figure 10 pathway 16. Initially, the user 11 selects the pathway 16 by standing at or near the first position 14a. The user 11 is subsequently transported automatically within the virtual space in correspondence with the pathway 16. This is represented by the spatial locations 14b, 14c and 14d, and the second location 15 where the pathway ends.

It will be appreciated that such traversal is virtual, that is it is achieved by modification of the virtual space 12 relative to the user 11 to generate the perception of said traversal; in reality, the user may be standing still or walking slowly in the real-world space. Further, during said traversal, the user 11 may still move in terms of rotation or gaze direction.

At the end of the traversal, the user 11 may automatically exit said pathway 16 at the second location 15 and interact with the virtual space 12 as before.

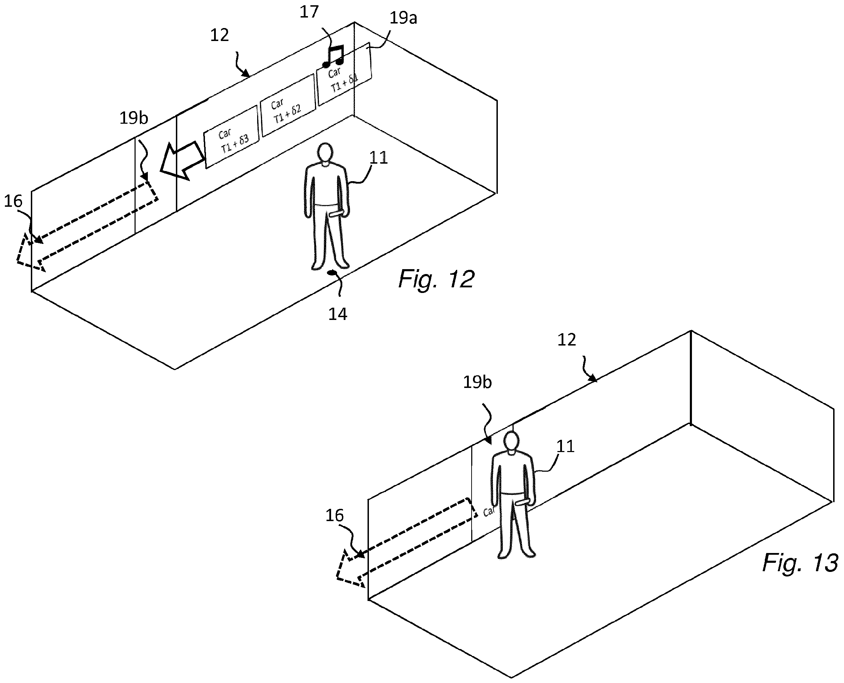

Referring now to Figure 12, in another example embodiment, the indicative audio signal is generated in the virtual space 12 such that the sound 17 is played prior to the existence of a pathway 16. For example, the sound 17 may indicate the arrival of the pathway 16 by spatial movement. In the shown example, the sound 17 is representative of a car noise projected along, or outside, a boundary wall. Any sound object may be used, however. The sound 17 may spatially change, either continuously or incrementally, such that the user perceives the car approaching from a distant location 19a, towards an active location 19b, at which point the pathway becomes active.

For example, a relatively quiet sound 17 may be played at time T₁ and projected at the distant location 19a. A louder version of the car sound 17 may be played at T₁ + δ₁, closer to the active location 19b. An even louder version of the car sound 17 may be played at T₁ + δ₂, T₁ + δ₃ etc. closer to the active location 19b, and so on until arrival at the active location.

In the shown example, the active location 19b is adjacent a doorway of the virtual space 12. Thus, the user 11 will perceive a car arriving adjacent the doorway such that stepping through the doorway causes selection of the pathway 16, although any of the above selection methods can be employed in the alternative. The sound 17 indicates the impending arrival of the pathway 16 and, as shown in Figure 13, directs the user 11 to its boarding location 19b so that they are facing the correct general direction.

The sound 17 may be arranged such that its speed and/or frequency changes over time to mimic the arriving car, e.g. using the Doppler effect. Another sound 17 may be provided in a composite audio signal which may or may not have the same speed and/or frequency change; for example the other sound 17 may represent one or more people in the car talking.

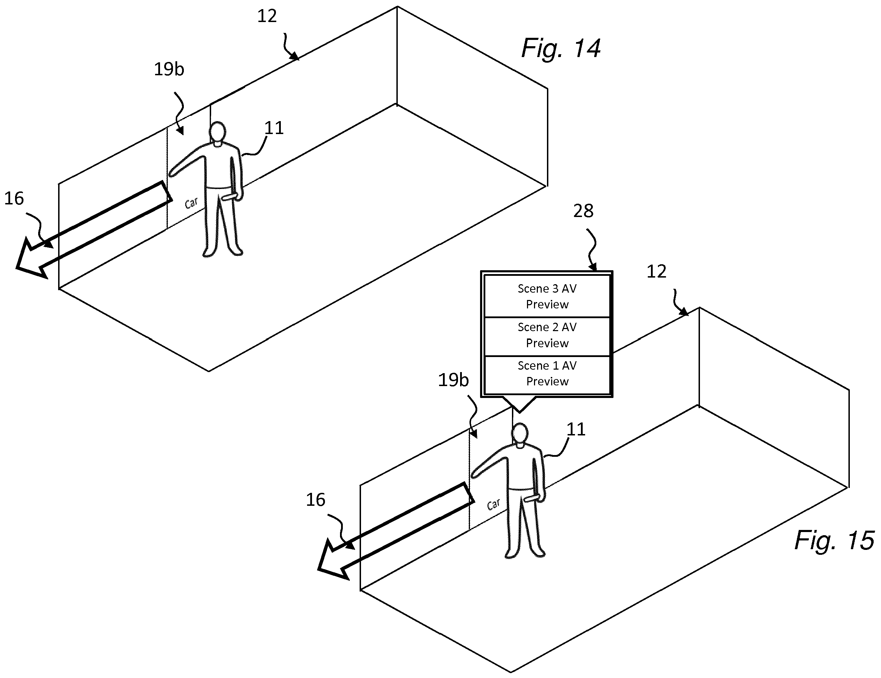

Upon arrival at the active location 19b, adjacent the doorway, the sound 17 may change so that the user 11 perceives the car being stationary. If composite audio is provided, another noise may prompt the user 11 to select the pathway 16 by walking through the doorway or by performing some other selection method. Referring to Figure 14, the virtual content may be arranged such that the car becomes visible in the virtual space at the active location 19b. It can, however, remain invisible.

In some example embodiments, as well as being able to select the pathway 16, the virtual content may be arranged such that one or more sets of preview content are presented. The preview content may be associated with the pathway 16, for example presenting what is shown during traversal and/or at the end of the pathway. For example, a limited sequence of frames representing virtual content of the end location may be presented.

As shown in Figure 15, a user gesture may cause preview content 28 to be presented, as opposed to invoking the traversal pathway. For example, detection of a particular user gesture may cause presentation of the preview content 28 for a limited period of time or on a repeating basis. Detection of another user gesture may cause selection of the pathway 16. Detection of the user 11 walking through the doorway onto the pathway 16 may cause selection of the pathway. The preview content 28 may comprise a plurality of preview scenes, automatically presented. The preview scenes may be composite audio scenes. If the user 11 wishes to move to the pathway destination, they may then walk onto the pathway 16 at which time traversal is invoked in the same manner as the previous example embodiment. Alternatively, the user 11 may decide to remain in the virtual space 12 and therefore does not select the pathway 16.

The Figures 12 - 15 example embodiment is particularly applicable to providing a plurality of distinct virtual spaces, for example first and second virtual rooms, the pathway 16 representing a portal between the different virtual spaces with the option of previewing the pathway destination. A plurality of such pathways 16 or portals may be provided in the virtual space 12.

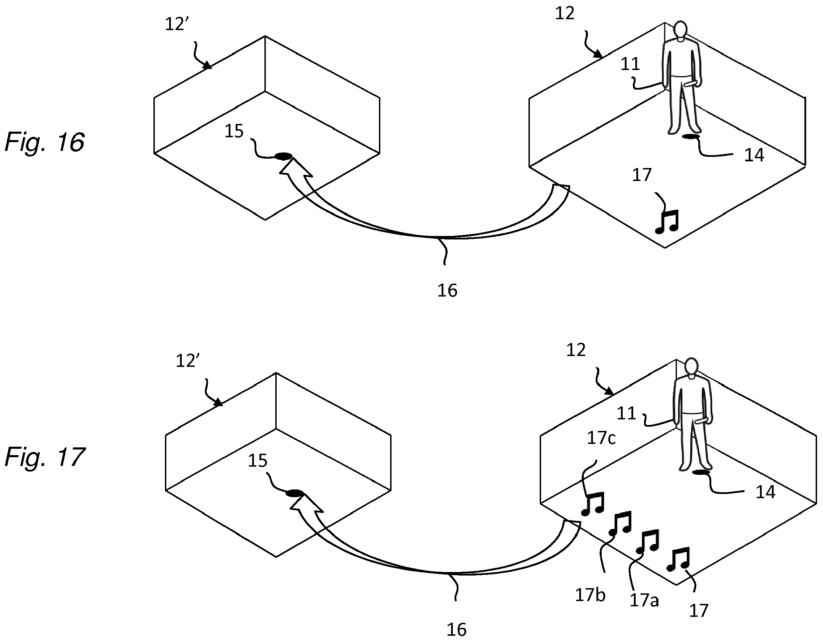

Referring to Figure 16, in another example embodiment, first and second virtual spaces 12, 12' may be virtual stores in, for example, a virtual shopping mall around which the user 11 may move with six degrees-of-freedom . For example, the virtual space 12 may represent a first store and the second virtual space 12' may represent a second store.

Similar to previous example embodiments, the indicative audio signal may be such that the sound 17 is played in the first virtual space 12 prior to the existence of the pathway 16. The sound 17 may, however, be constant if the pathway 16 is always present. For example, the sound 17 may indicate the arrival of the pathway 16 by spatial movement. In the shown example, the sound 16 is representative of a car noise projected along, or outside, a boundary wall. Any sound object may be used, however. The sound 17 could, for example, be a non-diagetic sound. The sound 17 may spatially change, either continuously or incrementally, such that the user perceives the car approaching a first position at which point the pathway becomes active.

For example, referring to Figure 17, a relatively quiet sound 17 may be played at time T₁ and projected at a location far away from the first position 14. A louder car sound 17a may be played at T₁ + δ₁, closer to the first position 14. An even louder car sound 17b may be played at T₁ + δ₂, closer to the first position 14, and so on until a final sound 17c indicates the car's arrival at the first position. The final sound 17c, along or together with a preceding sound 17b, may be such as to indicate the car slowing down or coming to a halt. For example, a braking sound may be generated it this or these location(s).

In the shown example, the first position 14 is within the virtual space 12. Thus, the user 11 perceives a car arriving from outside of the virtual space 12 to the first position 14. The sound 17 indicates the impending arrival of the pathway 16 and directs the user 11 to its location so that they are facing the correct general direction.

The sound 17 may be such that its speed and/or frequency changes over time to mimic the arriving car, e.g. using the Doppler effect. Another sound may be provided in a composite audio signal which may or may not have the same speed and/or frequency change; for example the other sound may represent one or more people in the car talking.

Upon arrival at the first position 14, the noise 17 may change so that the user 11 perceives the car as being stationary. If composite audio is provided, another noise may prompt the user 11 to select the pathway 16 by any one or more of the above-mentioned selection methods. The virtual content may be arranged such that the car becomes visible in the virtual spacei2 at the first position 14. The car may remain invisible, however.

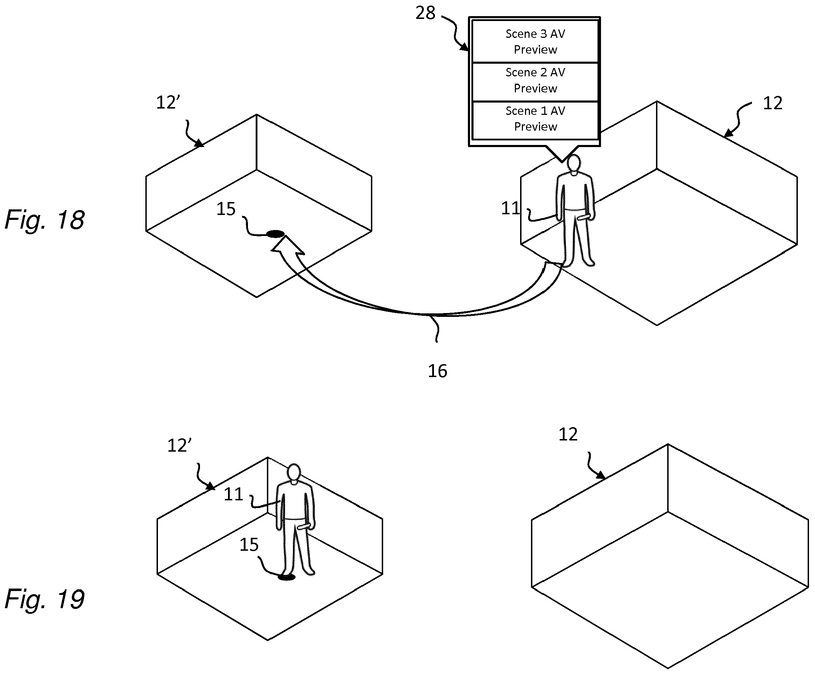

In some example embodiments, as well as being able to select the pathway 16, the virtual content may be such that one or more sets of preview content are presented. The preview content may be associated with the pathway 16, for example presenting what is shown during traversal and/or at the destination, i.e. the second virtual space 12'. For example, a limited sequence of frames representing virtual content of the second virtual space 12' may be presented. As shown in Figure 18, a user gesture may cause preview content 28 to be presented, as opposed to invoking the pathway 16. For example, detection of a particular user gesture towards or over the pathway 16 may cause presentation of the preview content 28 for a limited period of time or on a repeating basis. Detection of another user gesture may cause selection of the pathway 16. Detection of the user 11 walking over the pathway 16 may cause selection.

Figure 19 shows the user 11 having been transported to the second location 15 in the second virtual space 12' via the pathway 16. Alternatively, the user (having previewed the second location 15) may decide to remain in the current virtual space 12.

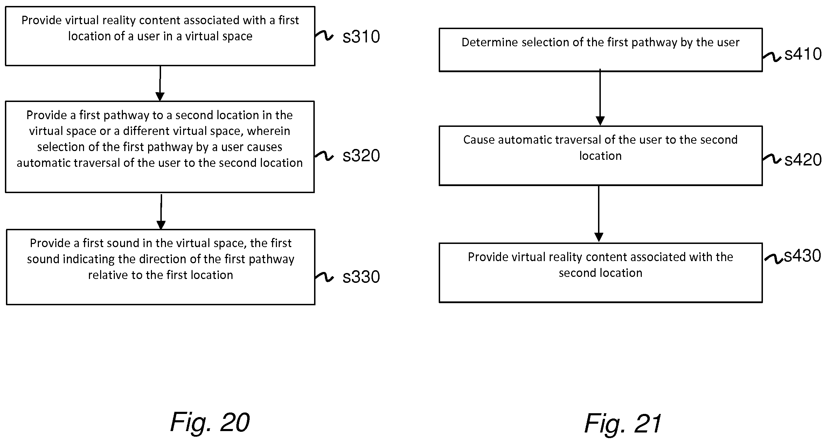

Figure 20 is a flow diagram showing processing operations performed by the software application 89. A first operation S310 comprises providing virtual reality content associated with a first location of a user in a virtual space. A second operation S320 comprises providing a first pathway to a second location in the virtual space, or a different virtual space, wherein selection of the first pathway by a user causes automatic traversal of the user to the second location. A third operation S330 comprises providing a first sound in the virtual space, the first sound indicating the direction of the first pathway relative to the first location.

Figure 21 is a flow diagram showing processing operations performed by the software application 89 based on user interaction. A first operation S410 comprises determining selection of the first pathway by the user. A second operation S420 comprises causing automatic traversal of the user to the second location. A third operation S430 comprises providing virtual reality content associated with the second location.

It will be appreciated that certain operations may be re-ordered and/or performed in parallel. The number of the operations is not necessarily indicative of their processing order.

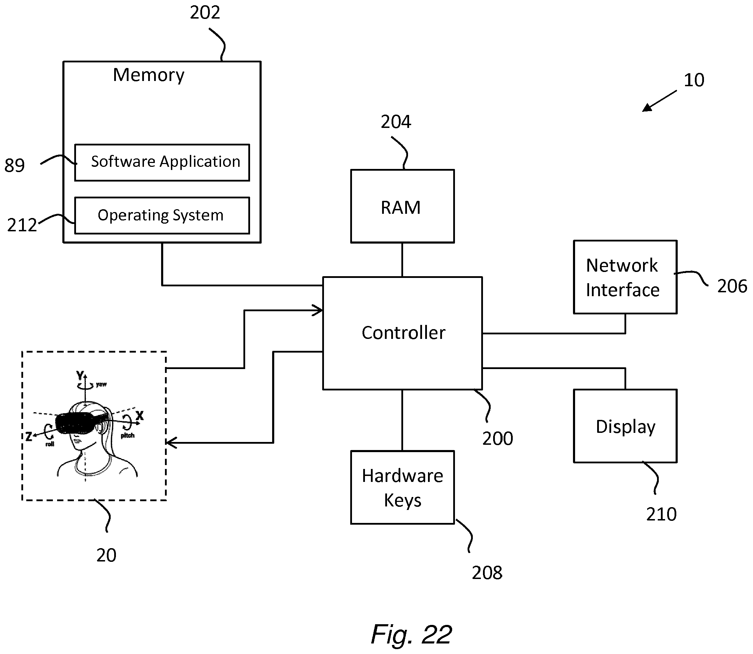

For completeness, Figure 22 shows a schematic diagram of components of the virtual reality media player 10. The virtual reality media player 10 may have a controller 200, memory 202 and RAM 204. The virtual reality media player 10 may comprise a network interface 206 for connection to the network 40, e.g. a modem which may be wired or wireless. The virtual reality media player 10 may also receive positional signals from the virtual reality headset 20 and outputs video and/or audio content for one or more virtual worlds to the virtual reality headset 20. The positional signals may be indicative of user position/orientation. The controller 200 is connected to each of the other components in order to control operation thereof.

The memory 202 may be a non-volatile memory such as read only memory (ROM), a hard disk drive (HDD) or a solid state drive (SSD). The memory 202 stores, amongst other things, an operating system 212 and the software application 89. The RAM 204 is used by the controller 200 for the temporary storage of data. The operating system 212 may contain code which, when executed by the controller 200 in conjunction with the RAM 204, controls operation of each of the hardware components.

The controller 200 may take any suitable form. For instance, it may be a microcontroller, plural microcontrollers, a processor, or plural processors.

In some example embodiments, the virtual reality media player 10 may also be associated with external software applications or virtual reality content data not stored on the memory 202. These may be applications or virtual reality content data stored on a remote server device and may run partly or exclusively on the remote server device. These applications or virtual reality content data may be termed cloud-hosted applications or data. The virtual reality media player 10 may be in communication with the remote server device in order to utilize the software application or data stored there.

The above example embodiments therefore provided an intuitive and useful way of presenting to users virtual reality content data which is larger than the real world space in which the user is located. The example embodiments may avoid or reduce the chance that the user will collide with boundaries or objects in the real world space by transporting them to different parts of the virtual space, or a different virtual space, using the pathway. Embodiments are particularly useful for virtual reality applications involving six degrees-of-freedom exploration. The example embodiments also provide a more interesting, and enjoyable user experience, and reduces the amount of effort required to explore the virtual space(s), which may be useful for users with limited movement ability.

It will be appreciated that the above described example embodiments are purely illustrative and are not limiting on the scope of the invention. Other variations and modifications will be apparent to persons skilled in the art upon reading the present application.

Moreover, the disclosure of the present application should be understood to include any novel features or any novel combination of features either explicitly or implicitly disclosed herein or any generalization thereof and during the prosecution of the present application or of any application derived therefrom, new claims may be formulated to cover any such features and/or combination of such features.

## Claims

1. An apparatus comprising:
means for providing virtual reality content associated with a first location of a user in a virtual space;
means for providing a pathway in the virtual space to a second location in the virtual space or a different virtual space, wherein selection of the pathway by a user causes traversal of the user to the second location; and
means for providing a sound in the virtual space, the sound indicating the position of the pathway relative to the first location.

2. The apparatus of claim 1, wherein the sound providing means is arranged such that the sound is a modified version of an existing sound.

3. The apparatus of claim 2, wherein the sound providing means is arranged such that the sound has a different playback speed to the speed of the recorded sound.

4. The apparatus of claim 3, wherein the sound providing means is arranged such that the playback speed of the sound is proportional to a time the user will take to automatically traverse the pathway.

5. The apparatus of any preceding claim, wherein the sound providing means is arranged such that the sound is a spatio-temporal audio object having a changing location in the virtual space.

6. The apparatus according to claim 5, wherein the sound providing means is arranged such that the audio object traverses the virtual space along a path substantially corresponding to at least part of the pathway.

7. The apparatus of claim 5 or 6, wherein the sound providing means is arranged such that a location of the audio object in the virtual space indicates a current location of at least part of the pathway.

8. The apparatus of claim 5, 6 or 7, wherein the sound providing means is arranged such that the audio object is provided in the virtual space before the pathway is provided in the virtual space, wherein a location and/or movement of the audio object in the virtual space indicates a location in virtual space at which at least part of the pathway is subsequently provided.

9. The apparatus of any preceding claim, further comprising:
means for determining selection of the pathway by the user; and
means, in response to determining selection of the pathway by the user:
for causing automatic traversal of the user to the second location; and
for providing virtual reality content associated with the second location.

10. The apparatus of claim 9, wherein the means for determining selection of the pathway is arranged such that selection is based on a location of at least part of the user in the virtual space.

11. The apparatus of claim 10, wherein the means for determining selection of the pathway is arranged such that selection is further based on a length of time that the at least part of the user is at said location.

12. The apparatus of claim 9, 10 or 11, wherein the means for determining selection of the pathway is arranged such that selection is based on determining a gesture of the user.

13. The apparatus of any preceding claim, further comprising:
means for determining that a user wishes to preview virtual reality content associated with the pathway or second location; and
means for providing a preview of virtual reality content associated with the pathway or second location.

14. A method comprising:
providing virtual reality content associated with a first location of a user in a virtual space;
providing a pathway in the virtual space to a second location in the virtual space or a different virtual space, wherein selection of the pathway by a user causes traversal of the user to the second location; and
providing a sound in the virtual space, the sound indicating the position of the pathway relative to the first location.

15. A computer program comprising instructions that when executed by a computer control it to perform:
providing virtual reality content associated with a first location of a user in a virtual space;
providing a pathway in the virtual space to a second location in the virtual space or a different virtual space, wherein selection of the pathway by a user causes traversal of the user to the second location; and
providing a sound in the virtual space, the sound indicating the position of the pathway relative to the first location
